# EUROPEAN PATENT APPLICATION

(11) **EP 4 317 220 A1**
(43) Date of publication of application: **07.02.2024**
(21) Application number: 22781301.1
(22) Date of filing: 31.03.2022
(51) Int. Cl.: C08F 214/26, C08L 27/12, C08L 27/18

(54) **FLUORORESIN COMPOSITION AND MOLDED BODY**

(30) Priority: 31.03.2021 JP 2021060839
(71) Applicant: DAIKIN INDUSTRIES, LTD., Osaka-Shi, Osaka 530-0001 (JP)
(72) Inventor: MUKAE, Hirofumi, Osaka-Shi, Osaka 530-0001 (JP); KISHIKAWA, Yosuke, Osaka-Shi, Osaka 530-0001 (JP); YAMANAKA, Taku, Osaka-Shi, Osaka 530-0001 (JP); KATO, Taketo, Osaka-Shi, Osaka 530-0001 (JP); ITOH, Ryuo, Osaka-Shi, Osaka 530-0001 (JP); KUBOTA, Hiroki, Osaka-Shi, Osaka 530-0001 (JP)
(74) Representative: Hoffmann Eitle
(86) International application number: PCT/JP2022/016869
(87) International publication number: WO 2022/211092

(57) **Abstract**

Provided is a fluororesin composition having excellent handleability while containing a fluororesin having a history of being heated to the melting point thereof or higher, and a molded article obtainable from the fluororesin composition. The disclosure provides a fluororesin composition containing: a non-melt-flowable fluororesin A having a history of being heated to a melting point thereof or higher; and a non-melt-flowable fluororesin B having no history of being heated to a melting point thereof or higher and being prepared by suspension polymerization. The fluororesin composition has an apparent density of 0.42 g/ml or higher.

## Description

### TECHNICAL FIELD

The disclosure relates to fluororesin compositions and molded articles.

### BACKGROUND ART

Polytetrafluoroethylene (PTFE) having a history of being heated to the melting point thereof or higher for processing such as molding fails to provide sufficient physical properties when it is directly reused as molding material, which causes partial recycling of such PTFE for the purpose of molding.

Patent Literature 1 and Patent Literature 2 disclose techniques relating to recycling of PTFE pulverized after firing or of heated PTFE.

### CITATION LIST

### - Patent Literature

Patent Literature 1: WO 2019/244433
Patent Literature 2: JP 2006-70233 A

### SUMMARY OF INVENTION

### - Technical Problem

The disclosure aims to provide a fluororesin composition having excellent handleability while containing a fluororesin having a history of being heated to the melting point thereof or higher and a molded article obtainable from the fluororesin composition.

### - Solution to Problem

The disclosure provides a fluororesin composition containing: a non-melt-flowable fluororesin A having a history of being heated to a melting point thereof or higher; and a non-melt-flowable fluororesin B having no history of being heated to a melting point thereof or higher and being prepared by emulsion polymerization, the fluororesin composition having an apparent density of 0.42 g/ml or higher.

The fluororesin A is preferably polytetrafluoroethylene.

The fluororesin composition preferably has at least one melting point within a temperature range lower than 333°C and at least one melting point within a temperature range from 333°C to 360°C.

The fluororesin composition preferably has an angle of repose of smaller than 40°.

The fluororesin composition preferably has an average secondary particle size of 5 to 500 µm.

Preferably, a low molecular weight fluorine-containing compound is contained in an amount of 1 ppm by mass or less of the fluororesin composition.

Preferably, the fluororesin composition contains a tetrafluoroethylene unit and a modifying monomer unit based on a modifying monomer copolymerizable with tetrafluoroethylene, the modifying monomer unit being present in an amount of 1.0% by mass or less of all polymerized units.

The fluororesin composition is preferably in the form of powder.

The fluororesin composition preferably has a tensile strength at break of 10 MPa or higher.

The fluororesin composition preferably has a tensile strain at break of 150% or higher.

The fluororesin composition is preferably a granulated product.

The fluororesin composition preferably further contains a filler.

The disclosure also provides a molded article obtainable by compression-molding and firing the fluororesin composition.

The disclosure also provides a fluororesin composition containing: a non-melt-flowable fluororesin A having a history of being heated to a melting point thereof or higher; and a non-melt-flowable fluororesin B having no history of being heated to a melting point thereof or higher and being prepared by emulsion polymerization, the fluororesin composition containing a tetrafluoroethylene unit and a modifying monomer unit based on a modifying monomer copolymerizable with tetrafluoroethylene.

The fluororesin composition preferably has an apparent density of 0.42 g/ml or higher.

### - Advantageous Effects of Invention

The disclosure can provide a fluororesin composition having excellent handleability while containing a fluororesin having a history of being heated to the melting point thereof or higher and a molded article obtainable from the fluororesin composition.

### DESCRIPTION OF EMBODIMENTS

The disclosure is described in detail below.

The disclosure provides a fluororesin composition (hereinafter, also referred to as a first fluororesin composition) containing: a non-melt-flowable fluororesin A having a history of being heated to a melting point thereof or higher; and a non-melt-flowable fluororesin B having no history of being heated to a melting point thereof or higher and being prepared by emulsion polymerization, the fluororesin composition having an apparent density of 0.42 g/ml or higher.

The first fluororesin composition contains a fluororesin B having no history of being heated to a melting point thereof or higher and being prepared by emulsion polymerization and has an apparent density within a specific range. It therefore has excellent handleability (e.g., handleability during transport or compression molding) while containing a fluororesin A having a history of being heated to the melting point thereof or higher.

The first fluororesin composition also has good tensile properties (e.g., tensile strength at break and tensile strain at break).

The first fluororesin composition preferably has at least one melting point within a temperature range lower than 333°C and at least one melting point within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to the melting point thereof or higher and a non-melt-flowable fluororesin B having no history of being heated to the melting point thereof or higher.

The fluororesin A has a history of being heated to the melting point thereof or higher. The heating may be heating for molding or heat treatment, for example.

The fluororesin A preferably has a melting point of not lower than 100°C but lower than 333°C, more preferably lower than 332°C, still more preferably lower than 331°C.

The lower limit thereof is more preferably 140°C, still more preferably not lower than 180°C, although not limited thereto.

The fluororesin A preferably has at least one melting point within a temperature range lower than 333°C. The temperature range lower than 333°C is more preferably lower than 332°C, still more preferably lower than 331°C, while preferably 100°C or higher, more preferably 140°C or higher, still more preferably 180°C or higher.

A melting point within the above range indicates that the resin has a history of being heated to the melting point thereof or higher.

The fluororesin A may also have a melting point within a temperature range of 333°C or higher.

The melting point of a fluororesin herein is the temperature corresponding to the local minimum on a heat-of-fusion curve obtained by differential scanning calorimetry (DSC) at a temperature-increasing rate of 10°C/min using X-DSC7000 (available from Hitachi High-Tech Science Corp.). In the case where one melting peak includes two or more local minimums, each minimum is defined as a melting point.

The fluororesin A is non-melt-flowable.

The term "non-melt-flowable" herein means that the melt flow rate (MFR) is lower than 0.25 g/10 min, preferably lower than 0.10 g/10 min, more preferably 0.05 g/10 min or lower.

The MFR herein is a value obtained in conformity with ASTM D1238 using a melt indexer, as the mass (g/10 min) of a polymer flowing out of a nozzle (inner diameter: 2.095 mm, length: 8 mm) per 10 minutes at a measurement temperature specified according to the type of the fluororesin (e.g., 372°C for PFA and FEP, 297°C for ETFE) and a load specified according to the type of the fluororesin (e.g., 5 kg for PFA, FEP, and ETFE). For PTFE, the MFR is a value obtained by measurement under the same measurement conditions as for PFA.

Alternatively, a fluororesin may also be determined as being non-melt-flowable in the case where the thickness of a molded article prepared by compression-molding the fluororesin to provide a preformed article (non-fired molded article) and heating this preformed article at the melting point of the fluororesin or higher for one hour or longer is smaller than the thickness before heating by less than 20% or is greater than the thickness before heating.

The fluororesin A is preferably polytetrafluoroethylene (PTFE). The PTFE may be a high molecular weight PTFE.

The PTFE as a fluororesin A may be a homopolymer of TFE or may be a modified PTFE containing 99.0% by mass or more of a polymerized unit based on TFE and 1.0% by mass or less of a polymerized unit based on a modifying monomer (hereinafter, also referred to as a "modifying monomer unit"). The modified PTFE may consist only of a polymerized unit based on TFE and a modifying monomer unit.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The modifying monomer unit herein means a moiety that is part of the molecular structure of PTFE and is derived from a modifying monomer.

The amounts of the aforementioned respective monomer units can be calculated by appropriate combination of NMR, FT-IR, elemental analysis, and X-ray fluorescence analysis in accordance with the types of the monomers.

The modifying monomer may be any monomer copolymerizable with TFE, and examples thereof include: perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ether; perfluoroallyl ether; (perfluoroalkyl)ethylene; and ethylene. One modifying monomer may be used or a plurality of modifying monomers may be used.

Examples of the perfluorovinyl ether include, but are not limited to, unsaturated perfluoro compounds represented by the following formula (A):

CF₂=CF-ORf (A)

wherein Rf is a perfluoroorganic group. The term "perfluoroorganic group" herein means an organic group in which all hydrogen atoms bonded to any carbon atom are replaced by fluorine atoms. The perfluoroorganic group may contain an ether oxygen.

Examples of the perfluorovinyl ether include a perfluoro(alkyl vinyl ether) (PAVE) represented by the formula (A) wherein Rf is a C1-C10 perfluoroalkyl group. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether also include:
those represented by the formula (A) wherein Rf is a C4-C9 perfluoro(alkoxy alkyl) group;
those represented by the formula (A) wherein Rf is a group represented by the following formula: 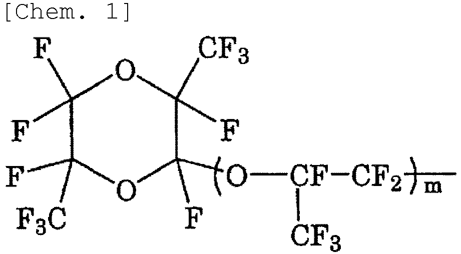 wherein m is 0 or an integer of 1 to 4; and
those represented by the formula (A) wherein Rf is a group represented by the following formula: 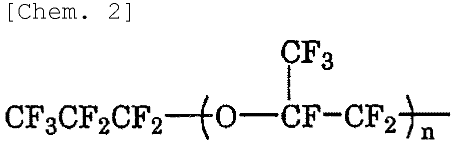 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf¹ (B)

wherein Rf¹ is a perfluoroorganic group.

Rf¹ is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

The PTFE as a fluororesin A preferably has a standard specific gravity (SSG) of 2.280 or lower, more preferably 2.10 or lower, while preferably 1.50 or higher, more preferably 1.60 or higher. The SSG is determined by the immersion method in conformity with ASTM D792 using a sample molded in conformity with ASTM D4895-89.

The PTFE as a fluororesin A commonly has non-melt secondary processibility. The non-melt secondary processibility means a property of a polymer such that the melt flow rate cannot be measured at a temperature higher than the melting point in conformity with ASTM D1238 and D2116, in other words, a property of a polymer such that it does not easily flow even within a melting point range.

The PTFE (high molecular weight PTFE) as a fluororesin A preferably has a melting point of 310°C or higher, more preferably 320°C or higher, while preferably lower than 333°C. The PTFE may also have a melting point within a temperature range of 333°C or higher.

The first fluororesin composition may contain particles of the fluororesin A. The particles of the fluororesin A may be secondary particles of the fluororesin A.

In order to achieve much improved handleability of the fluororesin composition, the particles of the fluororesin A preferably have an average secondary particle size of 1 to 200 um. The average secondary particle size is more preferably 5 µm or greater, still more preferably 10 um or greater, while more preferably 150 um or smaller, still more preferably 100 um or smaller, further preferably 70 um or smaller, particularly preferably 50 um or smaller, most preferably 30 um or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve much improved handleability of the fluororesin composition, the particles of the fluororesin A preferably have a D90 of 10 µm or greater, more preferably 30 um or greater, still more preferably 50 µm or greater, while preferably 600 um or smaller, more preferably 500 um or smaller, still more preferably 400 um or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The particles of the fluororesin A are obtainable, for example, by compression-molding and firing a non-melt-flowable fluororesin having no history of being heated to the melting point thereof or higher and then pulverizing chips of the resulting molded article. The pulverization may be performed using a pulverizer, for example. The pulverization may include coarse pulverization and subsequent fine pulverization. The compression-molded article may have any shape. The firing may be performed at any temperature that is not lower than the melting point of the fluororesin. Any pulverizer may be used that can pulverize (preferably, finely pulverize) the chips. Examples thereof include an air jet mill, a hammer mill, a force mill, a millstone pulverizer, and a freeze pulverizer.

The particles of the fluororesin A are also obtainable, for example, by heating a powder of a non-melt-flowable fluororesin up to the melting point thereof or higher without compression molding, with the fluororesin having no history of being heated to the melting point thereof or higher, and then pulverizing the product using a pulverizer. The pulverizer is as described above.

The fluororesin B has no history of being heated to the melting point thereof or higher.

The fluororesin B preferably has a melting point of 100°C to 360°C. The melting point is more preferably 140°C or higher, still more preferably 160°C or higher, while more preferably 355°C or lower, still more preferably 350°C or lower.

The fluororesin B preferably has at least one melting point within a temperature range from 333°C to 360°C. The temperature range is more preferably 334°C or higher, still more preferably 335°C or higher, while more preferably 355°C or lower, still more preferably 350°C or lower.

The presence of a melting point within the above range indicates the absence of a history of being heated to the melting point or higher.

In addition to the above melting point, the fluororesin C may also have a melting point within a temperature range lower than 333°C.

The fluororesin B is non-melt-flowable. The term "melt-flowable" is defined as described above.

The fluororesin B is preferably PTFE. The PTFE may be a high molecular weight PTFE.

Preferably, the PTFE (high molecular weight PTFE) as a fluororesin B has at least one endothermic peak within a temperature range from 333°C to 347°C on a heat-of-fusion curve at a temperature-increasing rate of 10°C/min using a differential scanning calorimeter (DSC) and has an enthalpy of fusion of 62 mJ/mg or higher at 290°C to 350°C calculated from the heat-of-fusion curve.

The PTFE as a fluororesin B preferably has a standard specific gravity (SSG) of 2.130 to 2.280. The standard specific gravity is determined by the immersion method in conformity with ASTM D792 using a sample molded in conformity with ASTM D4895-89.

For the PTFE having no history of being heated to the melting point thereof or higher, the term "high molecular weight" means that the standard specific gravity falls within the above range.

The PTFE as a fluororesin B commonly has non-melt secondary processibility. The term "non-melt secondary processibility" is defined as described above.

The PTFE as a fluororesin B may be a homopolymer of TFE or may be a modified PTFE containing 99.0% by mass or more of a polymerized unit based on TFE and 1.0% by mass or less of a polymerized unit based on a modifying monomer (modifying monomer unit). The modified PTFE may consist only of a polymerized unit based on TFE and a modifying monomer unit.

In order to achieve much improved handleability and much improved tensile properties of the fluororesin composition, a modified PTFE is preferred.

The modified PTFE preferably contains the modifying monomer unit in an amount of 0.00001 to 1.0% by mass of all polymerized units. The lower limit of the amount of the modifying monomer unit is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

Examples of the modifying monomer usable in the PTFE as a fluororesin B include those described as examples for the PTFE (high molecular weight PTFE) as a fluororesin A.

The fluororesin B is produced by emulsion polymerization. The non-melt-flowable fluororesin B prepared by emulsion polymerization may be one satisfying any of the following properties, and preferably satisfies all of the following properties:
(i) the proportion of particles (primary particles) having a particle size of 1 um or smaller, which is determined by image processing using a scanning electron microscope (SEM), is higher than 50%, preferably higher than 70%, more preferably higher than 90%; and
(ii) the amount of an anionic fluorine-containing surfactant, which is determined using a liquid chromatograph-mass spectrometer (LC/MS/MS) on a Soxhlet extract with methanol, is 1 ppb by mass or more.

The emulsion polymerization may be performed by a known method. For example, monomers to form a fluororesin B are emulsion-polymerized in an aqueous medium in the presence of an anionic fluorine-containing surfactant and a polymerization initiator, whereby an aqueous dispersion containing particles (primary particles) of the fluororesin B is obtained. The emulsion polymerization may be accompanied by appropriate use of additives such as a chain transfer agent, a buffer, a pH adjuster, a stabilization aid, and a dispersion stabilizer.

The aqueous dispersion may contain a hydrocarbon surfactant. The hydrocarbon surfactant is preferably free from a fluorine atom. The hydrocarbon surfactant may be one used in the emulsion polymerization or may be one added after the emulsion polymerization.

The hydrocarbon surfactant to be used may be any of those described in JP 2013-542308 T, JP 2013-542309 T, or JP 2013-542310 T, for example.

The hydrocarbon surfactant has a hydrophilic portion and a hydrophobic portion on the same molecule. These hydrocarbon surfactants may be cationic, nonionic, or anionic.

Common cationic surfactants have a positively charged hydrophilic portion such as an alkylated ammonium halide, e.g., alkylated ammonium bromide, and a hydrophobic portion such as a long-chain fatty acid.

Common anion surfactants have a hydrophilic portion such as a carboxylic acid salt, a sulfonic acid salt, or a sulfuric acid salt, and a hydrophobic portion such as a long-chain hydrocarbon portion, e.g., an alkyl.

Common nonionic surfactants are free from a charged group and have a hydrophilic portion which is a long-chain hydrocarbon. The hydrophilic portion of a nonionic surfactant contains a water-soluble functional group such as the chain of ethylene ether induced by polymerization with ethylene oxide.

The hydrocarbon surfactant is preferably an anion surfactant or a nonionic surfactant.

Examples of the anionic hydrocarbon surfactant include Versatic^{®} 10 available from Resolution Performance Products, LLC and Avanel S series (e.g., S-70, S-74) available from BASF.

The anionic hydrocarbon surfactant may also be an anion surfactant represented by R-L-M¹ wherein R is a C1 or higher linear or branched alkyl group optionally containing a substituent or a C3 or higher cyclic alkyl group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, -PO₃⁻, or - COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

Specific examples thereof include those represented by CH₃-(CH₂)ₙ-L-M¹ wherein n is an integer of 6 to 17; and L and M¹ are defined as described above.

Also usable is a mixture of those in which R is a C12-C16 alkyl group and L is a sulfuric acid salt or sodium dodecyl sulfate (SDS).

The anionic hydrocarbon surfactant may also be an anion surfactant represented by R⁶(-L-M¹)₂ wherein R⁶ is a C1 or higher linear or branched alkylene group optionally containing a substituent or a C3 or higher cyclic alkylene group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, -PO₃⁻, or - COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

The anionic hydrocarbon surfactant may also be an anion surfactant represented by R⁷(-L-M¹)₃ wherein R⁷ is a C1 or higher linear or branched alkylidyne group optionally containing a substituent or a C3 or higher cyclic alkylidyne group optionally containing a substituent, where the group optionally contains a monovalent or divalent heterocycle or optionally forms a ring in the case where it is a C3 or higher alkyl group; L is -ArSO₃⁻, -SO₃⁻, -SO₄⁻, - PO₃⁻, or -COO⁻; M¹ is H, a metal atom, NR⁵₄ (where R⁵s are the same as or different from each other and are each H or a C1-C10 organic group), imidazolium optionally having a substituent, pyridinium optionally having a substituent, or phosphonium optionally having a substituent, with -ArSO₃⁻being an aryl sulfonic acid salt.

An example of the anionic hydrocarbon surfactant is a sulfosuccinate surfactant Lankropol^{®} K8300 available from Akzo Nobel Surface Chemistry LLC.

Examples of sulfosuccinate hydrocarbon surfactants include sodium diisodecyl sulfosuccinate (Emulsogen^{®} SB10, available from Clariant) and sodium diisotridecyl sulfosuccinate (Polirol^{®} TR/LNA, available from Cesapinia Chemicals).

Examples of the anionic hydrocarbon surfactant also include PolyFox^{®} surfactants (e.g., PolyFox^{™} PF-156A and PolyFox^{™} PF-136A) available from Omnova Solutions, Inc.

Examples of the nonionic surfactant include ether nonionic surfactants such as a polyoxyethylene alkyl ether, a polyoxyethylene alkyl phenyl ether, and a polyoxyethylene alkylene alkyl ether; polyoxyethylene derivatives such as an ethylene oxide/propylene oxide block copolymer; ester nonionic surfactants such as a polyoxyethylene fatty acid ester (polyoxyethylene alkyl ester), a sorbitan fatty acid ester (sorbitan alkyl ester), a polyoxyethylene sorbitan fatty acid ester (polyoxyethylene sorbitan alkyl ester), a polyoxyethylene sorbitol fatty acid ester, and a glycerin fatty acid ester (glycerol ester); amine nonionic surfactants such as a polyoxyethylene alkyl amine and an alkyl alkanol amide; and derivatives thereof. One of these may be used alone, or two or more of these may be used in combination.

The nonionic surfactant may be a non-fluorinated nonionic surfactant.

Examples of the polyoxyethylene alkyl ether include polyoxyethylene lauryl ether, polyoxyethylene cetyl ether, polyoxyethylene stearyl ether, polyoxyethylene oleyl ether, and polyoxyethylene behenyl ether.

Examples of the polyoxyethylene alkyl phenyl ether include polyoxyethylene nonyl phenyl ether and polyoxyethylene octyl phenyl ether.

Specific examples of the polyoxyethylene fatty acid ester include polyethylene glycol monolaurate, polyethylene glycol monooleate, and polyethylene glycol monostearate.

Examples of the sorbitan fatty acid ester include sorbitan monolaurate, sorbitan monopalmitate, sorbitan monostearate, and sorbitan monooleate.

Examples of the polyoxyethylene sorbitan fatty acid ester include polyoxyethylene sorbitan monolaurate, polyoxyethylene sorbitan monopalmitate, and polyoxyethylene sorbitan monostearate.

Examples of the glycerin fatty acid ester include glycerol monomyristate, glycerol monostearate, and glycerol monooleate.

Examples of the derivatives include a polyoxyethylene alkyl amine, a polyoxyethylene alkyl phenyl-formaldehyde condensate, and a polyoxyethylene alkyl ether phosphate.

The ether nonionic surfactant and the ester nonionic surfactant may have a HLB value of 10 to 18.

Examples of the nonionic hydrocarbon surfactant include Triton^{®} X series (e.g., X15, X45, X100), Tergitol^{®} 15-S series, Tergitol^{®} TMN series (e.g., TMN-6, TMN-10, TMN-100), and Tergitol^{®} L series available from Dow Chemical Company, Pluronic^{®} R series (31R1, 17R2, 10R5, 25R4 (m: ~22, n: ~23)), T-Det series (A138), and Iconol^{®} TDA series (TDA-6, TDA-9, TDA-10) available from BASF.

In the compound of the nonionic surfactant, the hydrophobic group thereof may be any of an alkyl phenol group, a linear alkyl group, and a branched alkyl group. Still, the compound is preferably one containing no benzene ring, such as a compound having no alkyl phenol group in the structure.

In particular, the nonionic surfactant is preferably one containing an ether bond (-O-), more preferably the aforementioned ether nonionic surfactant, still more preferably a polyoxyethylene alkyl ether. The polyoxyethylene alkyl ether is preferably one including a polyoxyethylene alkyl ether structure containing a C10-C20 alkyl group, more preferably one including a polyoxyethylene alkyl ether structure containing a C10-C15 alkyl group. The alkyl group in the polyoxyethylene alkyl ether structure preferably has a branched structure.

In order to produce a fluororesin composition having much less coloring and much better tensile properties, the hydrocarbon surfactant is preferably contained in an amount of 12% by mass or less, more preferably 8% by mass or less, still more preferably 6% by mass or less, further preferably 4% by mass or less, even more preferably 2% by mass or less, particularly preferably 1% by mass or less of the solid content of the aqueous dispersion. The amount of the hydrocarbon surfactant may also be 1 ppm by mass or more, 10 ppm by mass or more, 100 ppm by mass or more, or 500 ppm by mass or more.

The above aqueous dispersion may be used to provide a fluororesin B.

Alternatively, the aqueous dispersion may be subjected to coagulation and drying to provide a powder containing particles of the fluororesin B. This powder may be used to provide a fluororesin B.

Coagulation and drying may be performed by any known techniques.

The first fluororesin composition may contain particles of the fluororesin B. The particles of the fluororesin B may be either primary particles or secondary particles of the fluororesin B.

In order to achieve much improved handleability of the fluororesin composition, the secondary particles of the fluororesin B preferably have an average secondary particle size of 1000 um or smaller. The average secondary particle size is more preferably 900 um or smaller, still more preferably 800 um or smaller, particularly preferably 700 um or smaller. The average secondary particle size is also preferably 100 um or greater, more preferably 200 um or greater, still more preferably 300 um or greater, particularly preferably 400 µm or greater.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve much improved handleability of the fluororesin composition, the particles of the fluororesin B preferably have a D90 of 10 µm or greater, more preferably 30 um or greater, still more preferably 50 µm or greater, while preferably 2000 um or smaller, more preferably 1500 um or smaller, still more preferably 1200 µm or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

The first fluororesin composition has an apparent density of 0.42 g/ml or higher. The first fluororesin composition having an apparent density within this range has excellent handleability.

In order to achieve much better handleability, the apparent density is preferably 0.45 g/ml or higher, more preferably 0.47 g/ml or higher. The upper limit may be, but is not limited to, 1.00 g/ml.

The apparent density is determined in conformity with JIS K6891.

In order to achieve more improved tensile properties, the amount of the fluororesin A in the first fluororesin composition is preferably 10 to 90% by mass of the fluororesin composition. The amount is more preferably 20% by mass or more, still more preferably 30% by mass or more, further preferably 40% by mass or more, further more preferably 50% by mass or more, particularly preferably more than 50% by mass, while more preferably 85% by mass or less, still more preferably 80% by mass or less, further preferably less than 80% by mass, even more preferably 75% by mass or less, particularly preferably 70% by mass or less.

In order to achieve more improved tensile properties, the amount of the fluororesin B in the first fluororesin composition is preferably 10 to 90% by mass of the fluororesin composition. The amount is more preferably 15% by mass or more, still more preferably 20% by mass or more, further preferably more than 20% by mass, further more preferably 25% by mass or more, particularly preferably 30% by mass or more, while more preferably 80% by mass or less, still more preferably 70% by mass or less, further preferably 60% by mass or less, further more preferably 50% by mass or less, particularly preferably less than 50% by mass.

The total amount of the fluororesins A and B in the first fluororesin composition is preferably 80% by mass or more, more preferably 85% by mass or more, still more preferably 90% by mass or more, further preferably 95% by mass or more, particularly preferably 98% by mass or more of the fluororesin composition.

Preferably, the first fluororesin composition contains a TFE unit and a modifying monomer unit based on a modifying monomer copolymerizable with TFE and the modifying monomer unit is present in an amount of 1.0% by mass or less of all polymerized units. The TFE unit is preferably present in an amount of 99.0% by mass or more.

The lower limit of the amount of the modifying monomer unit in the first fluororesin composition may be 0% by mass, and is more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The amount of the modifying monomer unit can be calculated by appropriate combination of NMR, FT-IR, elemental analysis, and X-ray fluorescence analysis in accordance with the type of the monomer. In the case where the composition of materials is known, the amount may be calculated from the composition of materials.

The disclosure also provides a fluororesin composition (hereinafter, also referred to as a second fluororesin composition) containing: a non-melt-flowable fluororesin A having a history of being heated to a melting point thereof or higher; and a non-melt-flowable fluororesin B having no history of being heated to a melting point thereof or higher and being prepared by emulsion polymerization, the fluororesin composition containing a TFE unit and a modifying monomer unit based on a modifying monomer copolymerizable with TFE.

The second fluororesin composition has a specific composition of monomers and therefore has excellent handleability (e.g., handleability during transport or compression molding) while containing a fluororesin A having a history of being heated to the melting point thereof or higher.

The second fluororesin composition also has good tensile properties (e.g., tensile strength at break and tensile strain at break).

The second fluororesin composition preferably has at least one melting point within a temperature range lower than 333°C and at least one melting point within a temperature range from 333°C to 360°C.

The temperature range lower than 333°C is more preferably lower than 332°C, still more preferably lower than 331°C, while preferably 100°C or higher, more preferably 140°C or higher, still more preferably 160°C or higher.

The temperature range from 333°C to 360°C is more preferably 334°C or higher, still more preferably 335°C, while more preferably 355°C or lower, still more preferably 350°C or lower.

The presence of the melting points in the two respective temperature ranges indicates that the fluororesin composition contains a non-melt-flowable fluororesin A having a history of being heated to the melting point thereof or higher and a non-melt-flowable fluororesin B having no history of being heated to the melting point thereof or higher.

Examples of the fluororesin A in the second fluororesin composition used include those for the fluororesin A in the first fluororesin composition.

Examples of the fluororesin B in the second fluororesin composition used include those for the fluororesin B in the first fluororesin composition, and preferred is a modified PTFE containing 99.0% by mass or more of a polymerized unit based on TFE (TFE unit) and 1.0% by mass or less of a polymerized unit based on a modifying monomer (modifying monomer unit). The fluororesin B may consist only of a TFE unit and a modifying monomer unit.

Examples of the modifying monomer include the monomers described above for the modified PTFE as a fluororesin B in the first fluororesin composition. A preferred range of the amount of the modifying monomer unit is also the same as the range described for the first fluororesin composition.

The fluororesin B in the second fluororesin composition is the same as the fluororesin B in the first fluororesin composition except for the composition thereof.

The second fluororesin composition contains a TFE unit and a modifying monomer unit based on a modifying monomer copolymerizable with TFE. The second fluororesin composition may consist only of a TFE unit and a modifying monomer unit as the polymerized units.

In order to achieve much improved handleability and tensile properties of the fluororesin composition, the modifying monomer unit is preferably contained in an amount of 1.0% by mass or less of all polymerized units of the fluororesin composition. The lower limit of the amount of the modifying monomer unit is preferably 0.00001% by mass, more preferably 0.0001% by mass, still more preferably 0.001% by mass, further preferably 0.005% by mass, even more preferably 0.010% by mass. The upper limit of the amount of the modifying monomer unit is preferably 0.90% by mass, more preferably 0.50% by mass, still more preferably 0.40% by mass, further preferably 0.30% by mass, even more preferably 0.20% by mass, particularly preferably 0.10% by mass.

The second fluororesin composition preferably contains the TFE unit in an amount of 99.0% by mass or more of all polymerized units.

The amounts of the respective polymerized units of the second fluororesin composition can be calculated by appropriate combination of NMR, FT-IR, elemental analysis, and X-ray fluorescence analysis in accordance with the types of the monomers. In the case where the composition of materials is known, the amounts may be calculated from the composition of materials.

The amounts of the fluororesins A and B in the second fluororesin composition as well as the total amount of the fluororesins A and B are the same as the respective amounts described for the first fluororesin composition.

In order to achieve much better handleability, the second fluororesin composition preferably has an apparent density of 0.42 g/ml or higher, more preferably 0.45 g/ml or higher, still more preferably 0.47 g/ml or higher. The upper limit may be, but is not limited to, 1.00 g/ml.

The apparent density is determined in conformity with JIS K6891.

The first and second fluororesin compositions each may be in any form, and is preferably in the form of powder.

The first and second fluororesin compositions each may be one satisfying any of the following properties, and preferably satisfy all of the following properties:
(i) the proportion of particles (primary particles) having a particle size of 1 um or smaller, which is obtained by image processing using a scanning electron microscope (SEM), is higher than 50%, preferably higher than 70%, more preferably higher than 90%; and
(ii) the amount of an anionic fluorine-containing surfactant, which is determined using a liquid chromatograph-mass spectrometer (LC/MS/MS) on a Soxhlet extract with methanol, is 1 ppb by mass or more.

In order to achieve excellent flowability and much better handleability, the first and second fluororesin compositions each preferably have an angle of repose of lower than 40°, more preferably lower than 38°, still more preferably lower than 35°.

The angle of repose is a value obtained as follows. Specifically, a funnel having a total height of 115 mm, a stem diameter of ϕ26 mm, a stem length of 35 mm, and an angle of mouth of 60° is placed such that the height of the bottom of the funnel is 100 mm from the surface where the sample is to be dropped. Then, 40 g of the sample is dropped through the funnel to form a cone of the sample dropped. The angle of the lower half of the cone is measured using a goniometer.

The first and second fluororesin compositions each preferably have an average secondary particle size of 50 to 500 um. The average secondary particle size is more preferably 70 um or greater, still more preferably 100 um or greater, while more preferably 300 um or smaller, still more preferably 200 um or smaller.

The average secondary particle size is equivalent to the particle size corresponding to 50% of the cumulative volume in the particle size distribution determined in dry measurement using a laser diffraction particle size distribution analyzer (LS13 320) available from Beckman Coulter, Inc. at a vacuum pressure of 20 mH₂O.

The first and second fluororesin compositions each preferably have a D90 of 10 µm or greater, more preferably 30 um or greater, still more preferably 50 µm or greater, particularly preferably 100 um or greater, while preferably 800 um or smaller, more preferably 600 um or smaller, still more preferably 500 um or smaller.

The D90 is equivalent to the particle size corresponding to 90% of the cumulative volume in the particle size distribution determined in dry measurement using a laser diffraction particle size distribution analyzer (LS13 320) available from Beckman Coulter, Inc. at a vacuum pressure of 20 mH₂O.

In order to achieve more improved tensile properties, the first and second fluororesin compositions each preferably contain a low molecular weight fluorine-containing compound in an amount (total amount) of 1 ppm by mass or less, more preferably 500 ppb by mass or less, still more preferably 100 ppb by mass or less, further preferably 50 ppb by mass or less, even more preferably 25 ppb by mass or less, particularly preferably 10 ppb by mass or less, more particularly preferably 5 ppb by mass or less, still more particularly preferably 1 ppb by mass or less, most preferably less than 1 ppb by mass of the fluororesin composition.

The amount of the low molecular weight fluorine-containing compound is determined using a liquid chromatograph-mass spectrometer (LC/MS/MS) on a Soxhlet extract of a sample with methanol.

Examples of the low molecular weight fluorine-containing compound include C4 or higher fluorine-containing carboxylic acids and salts thereof and C4 or higher fluorine-containing sulfonic acid and salts thereof. Each of these may contain an ether bond (-O-).

The low molecular weight fluorine-containing compound may be, for example, a fluorine-containing anion surfactant. For example, the fluorine-containing anion surfactant may be a surfactant which contains a fluorine atom and in which the portions excluding the anionic group have a total carbon number of 20 or less.

The fluorine-containing surfactant may also be a surfactant which contains fluorine and in which the anionic portion has a molecular weight of 800 or lower.

The "anionic portion" means a portion of the fluorine-containing surfactant excluding the cation. For example, in the case of F(CF₂)ₙ₁COOM represented by the formula (I) to be described later, the portion "F(CF₂)ₙ₁COO" corresponds to the anionic portion.

The low molecular weight fluorine-containing compound may also be a fluorine-containing surfactant having a LogPOW of 3.5 or lower. The LogPOW is a partition coefficient of 1-octanol and water, and is represented by LogP wherein P is the ratio (concentration of fluorine-containing surfactant in octanol)/(concentration of fluorine-containing surfactant in water) after phase separation of an octanol/water (1:1) liquid mixture containing the fluorine-containing surfactant.

The LogPOW is calculated as follows. Specifically, HPLC is performed on standard substances (heptanoic acid, octanoic acid, nonanoic acid, and decanoic acid) having known octanol/water partition coefficients under the following conditions, i.e., column: TOSOH ODS-120T column (ϕ4.6 mm × 250 mm, available from Tosoh corp.); eluent: acetonitrile/0.6% by mass HClO₄ in water = 1/1 (vol/vol%); flow rate: 1.0 mL/min; amount of sample: 300 µL, column temperature: 40°C, and detection light: UV 210 nm. A calibration curve is then drawn using the respective elution times and known octanol/water partition coefficients. Based on this calibration curve, the LogPOW is calculated from the elution time of a sample liquid in HPLC.

Specific examples of the fluorine-containing surfactant include those disclosed in US 2007/0015864 A1, US 2007/0015865 A1, US 2007/0015866 A1, US 2007/0276103 A1, US 2007/0117914 A1, US 2007/142541 A1, US 2008/0015319 A1, US 3250808 A, US 3271341 A, JP 2003-119204 A, WO 2005/042593 A1, WO 2008/060461 A1, WO 2007/046377 A1, JP 2007-119526 A, WO 2007/046482 A1, WO 2007/046345 A1, US 2014/0228531 A1, WO 2013/189824 A1, and WO 2013/189826 A1.

Examples of the fluorine-containing anion surfactant include compounds represented by the following formula (N⁰):

Xⁿ⁰-Rfⁿ⁰-Y⁰ (N⁰)

wherein Xⁿ⁰ is H, Cl, or/and F; Rfⁿ⁰ is a C3-C20 linear, branched, or cyclic alkylene group in which any or all of H atoms are replaced by F atoms, where the alkylene group optionally contains at least one ether bond and any H is optionally replaced by Cl; and Y° is an anionic group.

The anionic group for Y° may be -COOM, -SO₂M, or - SO₃M, and may be -COOM or -SO₃M.

M is H, a metal atom, NR⁷₄, imidazolium optionally having a substituent, pyridinium optionally having a substituent, or phosphonium optionally having a substituent, where R⁷ is H or an organic group.

Examples of the metal atom include alkali metals (Group 1) and alkaline earth metals (Group 2), such as Na, K, and Li.

R⁷ may be H or a C1-C10 organic group, or may be H or a C1-C4 organic group, or may be H or a C1-C4 alkyl group.

M may be H, a metal atom, or NR⁷₄, or may be H, an alkali metal (Group 1), an alkaline earth metal (Group 2), or NR⁷₄, or may be H, Na, K, Li, or NH₄.

Rfⁿ⁰ may be a group in which 50% or more of H atoms are replaced by fluorine atoms.

Examples of the compounds represented by the formula (N⁰)include
compounds represented by the following formula (N¹):

   Xⁿ⁰-(CF₂)ₘ₁-Y⁰ (N¹)

   wherein Xⁿ⁰ is H, Cl, or F; m1 is an integer of 3 to 15; and Y° is defined as described above;
compounds represented by the following formula (N²):

   Rfⁿ¹-O-(CF(CF₃)CF₂O)ₘ₂CFXⁿ¹-Y⁰ (N²)

   wherein Rfⁿ¹ is a C1-C5 perfluoroalkyl group; m2 is an integer of 0 to 3; Xⁿ¹ is F or CF₃; and Y⁰ is defined as described above;
compounds represented by the following formula (N³):

   Rfⁿ²(CH₂)ₘ₃-(Rfⁿ³)_{q}-Y⁰ (N³)

   wherein Rfⁿ² is a C1-C13 partially or completely fluorinated alkyl group optionally containing an ether bond and/or a chlorine atom; m3 is an integer of 1 to 3; Rfⁿ³ is a C1-C3 linear or branched perfluoroalkylene group; q is 0 or 1; and Y° is defined as described above;
compounds represented by the following formula (N⁴):

   Rfⁿ⁴-O-(CYⁿ¹Yⁿ²)ₚCF₂-Y⁰ (N⁴)

   wherein Rfⁿ⁴ is a C1-C12 linear or branched, partially or completely fluorinated alkyl group optionally containing an ether bond; Yⁿ¹ and Yⁿ² are the same as or different from each other and are each H or F; p is 0 or 1; and Y⁰ is defined as described above; and
compounds represented by the following formula (N⁵): 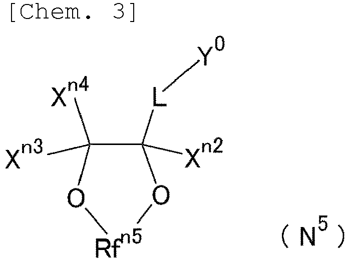 wherein Xⁿ², Xⁿ³, and Xⁿ⁴ are the same as or different from each other and are each H, F, or a C1-C6 linear or branched, partially or completely fluorinated alkyl group optionally containing an ether bond; Rfⁿ⁵ is a C1-C3 linear or branched, partially or completely fluorinated alkylene group optionally containing an ether bond; L is a linking group; and Y° is defined as described above, where the total carbon number of Xⁿ², Xⁿ³, Xⁿ⁴, and Rfⁿ⁵ is 18 or less.

Specific examples of the compound represented by the formula (N⁰) include a perfluorocarboxylic acid (I) represented by the following formula (I), an ω-H perfluorocarboxylic acid (II) represented by the following formula (II), a perfluoroether carboxylic acid (III) represented by the following formula (III), a perfluoroalkyl alkylene carboxylic acid (IV) represented by the following formula (IV), an alkoxyfluorocarboxylic acid (V) represented by the following formula (V), a perfluoroalkyl sulfonic acid (VI) represented by the following formula (VI), an ω-H perfluorosulfonic acid (VII) represented by the following formula (VII), a perfluoroalkyl alkylene sulfonic acid (VIII) represented by the following formula (VIII), an alkyl alkylene carboxylic acid (IX) represented by the following formula (IX), a fluorocarboxylic acid (X) represented by the following formula (X), an alkoxyfluorosulfonic acid (XI) represented by the following formula (XI), a compound (XII) represented by the following formula (XII), and a compound (XIII) represented by the following formula (XIII).

The perfluorocarboxylic acid (I) is represented by the following formula (I):

F(CF₂)ₙ₁COOM (I)

wherein n1 is an integer of 3 to 14; M is H, a metal atom, NR⁷₄, imidazolium optionally having a substituent, pyridinium optionally having a substituent, or phosphonium optionally having a substituent, where R⁷ is H or an organic group.

The ω-H perfluorocarboxylic acid (II) is represented by the following formula (II):

H(CF₂)ₙ₂COOM (II)

wherein n2 is an integer of 4 to 15; and M is defined as described above.

The perfluoroether carboxylic acid (III) is represented by the following formula (III):

Rf¹-O-(CF(CF₃)CF₂O)ₙ₃CF(CF₃)COOM (III)

wherein Rf¹ is a C1-C5 perfluoroalkyl group; n3 is an integer of 0 to 3; and M is defined as described above.

The perfluoroalkyl alkylene carboxylic acid (IV) is represented by the following formula (IV):

Rf²(CH₂)ₙ₄Rf³COOM (IV)

wherein Rf² is a C1-C5 perfluoroalkyl group; Rf³ is a C1-C3 linear or branched perfluoroalkylene group; n4 is an integer of 1 to 3; and M is defined as described above.

The alkoxyfluorocarboxylic acid (V) is represented by the following formula (V):

Rf⁴-O-CY¹Y²CF₂-COOM (V)

wherein Rf⁴ is a C1-C12 linear or branched, partially or completely fluorinated alkyl group optionally containing an ether bond and/or a chlorine atom; Y¹ and Y² are the same as or different from each other and are each H or F; and M is defined as described above.

The perfluoroalkylsulfonic acid (VI) is represented by the following formula (VI):

F(CF₂)ₙ₅SO₃M (VI)

wherein n5 is an integer of 3 to 14; and M is defined as described above.

The ω-H perfluorosulfonic acid (VII) is represented by the following formula (VII):

H(CF₂)ₙ₆SO₃M (VII)

wherein n6 is an integer of 4 to 14; and M is defined as described above.

The perfluoroalkyl alkylene sulfonic acid (VIII) is represented by the following formula (VIII):

Rf⁵(CH₂)ₙ₇SO₃M (VIII)

wherein Rf⁵ is a C1-C13 perfluoroalkyl group; n7 is an integer of 1 to 3; and M is defined as described above.

The alkyl alkylene carboxylic acid (IX) is represented by the following formula (IX):

Rf⁶(CH₂)ₙ₈COOM (IX)

wherein Rf⁶ is a C1-C13 linear or branched, partially or completely fluorinated alkyl group optionally containing an ether bond; n8 is an integer of 1 to 3; and M is defined as described above.

The fluorocarboxylic acid (X) is represented by the following formula (X):

Rf⁷-O-Rf⁸-O-CF₂-COOM (X)

wherein Rf⁷ is a C1-C6 linear or branched, partially or completely fluorinated alkyl group optionally containing an ether bond and/or a chlorine atom; Rf⁸ is a C1-C6 linear or branched, partially or completely fluorinated alkyl group; and M is defined as described above.

The alkoxyfluorosulfonic acid (XI) is represented by the following formula (XI):

Rf⁹-O-CY¹Y²CF₂-SO₃M (XI)

wherein Rf⁹ is a C1-C12 linear or branched, partially or completely fluorinated alkyl group optionally containing an ether bond and optionally containing a chlorine atom; Y¹ and Y² are the same as or different from each other and are each H or F; and M is defined as described above.

The compound (XII) is represented by the following formula (XII): 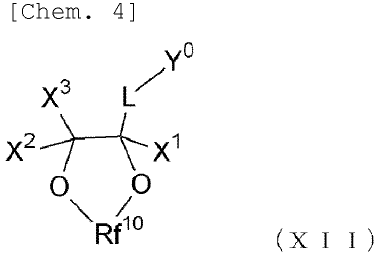 wherein X¹, X², and X³ are the same as or different from each other and are each H, F, or a C1-C6 linear or branched, partially or completely fluorinated alkyl group optionally containing an ether bond; Rf¹⁰ is a C1-C3 perfluoroalkylene group; L is a linking group; and Y° is an anionic group.

Y° may be -COOM, -SO₂M, or -SO₃M, or may be -SO₃M or COOM, wherein M is defined as described above.

L may be a single bond or a C1-C10 partially or completely fluorinated alkylene group optionally containing an ether bond, for example.

The compound (XIII) is represented by the following formula (XIII):

Rf¹¹-O-(CF₂CF(CF₃)O)ₙ₉(CF₂O)ₙ₁₀CF₂COOM (XIII)

wherein Rf¹¹ is a C1-C5 fluoroalkyl group containing chlorine; n9 is an integer of 0 to 3; n10 is an integer of 0 to 3; and M is defined as described above. The compound (XIII) may be CF₂ClO(CF₂CF(CF₃)O)ₙ₉(CF₂O)ₙ₁₀CF₂COONH₄, which is a mixture having an average molecular weight of 750, wherein n9 and n10 are defined as described above.

As described above, examples of the fluorine-containing anion surfactant include carboxylic acid surfactants and sulfonic acid surfactants.

The fluorine-containing surfactant may be a single fluorine-containing surfactant or may be a mixture of two or more fluorine-containing surfactants.

Examples of the fluorine-containing surfactant include compounds represented by any of the following formulas. The fluorine-containing surfactant may be a mixture of any of these compounds:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF (CF₃)CF₂OCF₂COOM,

CF₂ClCF(CF₃)OCF₂CF(CF₃)OCF₂COOM,

and

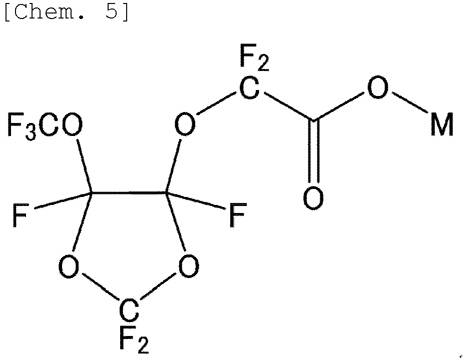

In the formulas, M is H, a metal atom, NR⁷₄, imidazolium optionally having a substituent, pyridinium optionally having a substituent, or phosphonium optionally having a substituent; where R⁷ is defined as described above.

The first and second fluororesin compositions each preferably further contain a filler. This can lead to improved mechanical properties such as abrasion resistance and compressive creep resistance.

Examples of the filler include glass fiber, glass beads, carbon fiber, spherical carbon, carbon black, graphite, silica, alumina, mica, silicon carbide, boron nitride, titanium oxide, bismuth oxide, cobalt oxide, molybdenum disulfide, bronze, gold, silver, copper, nickel, aromatic polyester, polyimide, and polyphenylene sulfide. One or two or more of these may be used.

Preferred is at least one selected from the group consisting of glass fiber, carbon fiber, graphite, and bronze.

The filler is preferably contained in an amount of 0 to 80% by mass of the fluororesin composition. The amount is more preferably 1% by mass or more, still more preferably 5% by mass or more, further preferably 10% by mass or more, particularly preferably 12% by mass or more, while more preferably 70% by mass or less, still more preferably 60% by mass or less, further preferably 50% by mass or less, further more preferably 40% by mass or less, particularly preferably 30% by mass or less, most preferably 25% by mass or less.

The first and second fluororesin compositions each may be produced, for example, by mixing the powder of the fluororesin A and particles of the fluororesin B.

The particles of the fluororesin B to be mixed with the powder of the fluororesin A may be in the form of powder or may be in the form of aqueous dispersion. In order to produce a fluororesin composition having much improved handleability and much improved tensile properties, the particles of the fluororesin B to be mixed with the powder of the fluororesin A are preferably in the form of powder.

The mixing may be performed using a pulverizer provided with a rotating blade, for example. An example of the pulverizer provided with a rotating blade is Wonder Crusher WC-3 available from Osaka Chemical Co., Ltd.

In the mixing with this pulverizer, the rotating frequency of the blade is preferably set to 1500 to 10000 rpm. A rotating frequency within this range can lead to a reduced shearing force during mixing and reduced fiberization of the fluororesin B, resulting in a fluororesin composition having a high apparent density and excellent handleability. In the case where the fluororesin B is a TFE homopolymer, the rotating frequency is preferably set to 1500 to 2500 rpm.

Granulating the fluororesin composition after mixing can also provide a fluororesin composition having a high apparent density and excellent handleability. In this embodiment, the mixing may be performed under conditions where the fluororesin B is easily fiberized.

The granulation may be performed by any known method, such as underwater granulation, hot water granulation, emulsification-dispersion granulation, emulsification hot water granulation, solvent-free granulation, or dry solvent granulation.

The resulting fluororesin composition may be pulverized. The pulverization may be performed by any known method, such as use of an air jet mill, a hammer mill, a force mill, a millstone pulverizer, or a freeze pulverizer.

The first and second fluororesin compositions each preferably have a tensile strength at break of 10 MPa or higher, more preferably 15 MPa or higher, still more preferably 17 MPa or higher, particularly preferably 20 MPa or higher. The upper limit thereof may be, but is not limited to, 30 MPa, for example.

The tensile strength at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708.

The first and second fluororesin compositions each preferably have a tensile strain at break of 150% or higher, more preferably 200% or higher, still more preferably 300% or higher, particularly preferably 330% or higher. The upper limit thereof may be, but is not limited to, 600%, for example.

The tensile strain at break is determined as follows. Specifically, 35 g of the fluororesin composition is put into a ϕ100-mm mold and compression-molded at a pressure of 30 MPa for one minute. The temperature is increased from room temperature to 300°C over three hours, then increased from 300°C to 370°C over four hours, then maintained at 370°C for 12 hours, then decreased to 300°C over five hours, and then decreased to room temperature over one hour, whereby a molded article is fired. The molded article is then cut into a dumbbell, which is used to measure the tensile strength at break in conformity with ASTM D1708.

The first and second fluororesin compositions each can suitably be used as a molding material. The fluororesin composition may be molded, for example, by compression molding, ram extrusion molding, or isostatic molding, although not limited thereto. Preferred among these is compression molding.

The first and second fluororesin compositions are each preferably in the form of a powder for compression molding.

The disclosure also provides a molded article obtainable by compression-molding and firing the first or second fluororesin composition.

The molded article of the disclosure has excellent tensile properties while containing a fluororesin having a history of being heated to the melting point thereof or higher.

The compression molding may be performed, for example, by maintaining the fluororesin composition at a pressure of 10 to 50 MPa for 1 minute to 30 hours.

The firing may be performed, for example, by heating the compression-molded article at a temperature of 350°C to 380°C for 0.5 to 50 hours.

The molded article of the disclosure preferably has a tensile strength at break of 10 MPa or higher, more preferably 15 MPa or higher, still more preferably 17 MPa or higher, particularly preferably 20 MPa or higher. The upper limit thereof may be, but is not limited to, 30 MPa, for example.

The tensile strength at break is measured in conformity with ASTM D1708.

The molded article of the disclosure preferably has a tensile strain at break of 150% or higher, more preferably 200% or higher, still more preferably 300% or higher, particularly preferably 330% or higher. The upper limit thereof may be, but is not limited to, 600%, for example.

The tensile strain at break is measured in conformity with ASTM D1708.

The molded article obtainable from the first or second fluororesin composition can suitably be used for a lining sheet, packing, gasket, diaphragm valve, heat-resistant electric wire, heat-resistant insulating tape for vehicle motors or generators, release sheet, sealant, casing, sleeve, bellows, hose, piston ring, butterfly valve, rectangular tank, wafer carrier, and the like.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### (Melting point)

The melting point was determined as the temperature corresponding to the local minimum on a heat-of-fusion curve obtained by differential scanning calorimetry (DSC) at a temperature-increasing rate of 10°C/min using X-DSC7000 available from Hitachi High-Tech Science Corp. In the case where one melting peak included two or more local minimums, each minimum was defined as a melting point.

### (Composition of monomers in fluororesin)

The composition was determined by ¹⁹F-NMR.

### (Secondary particle size of powder)

The secondary particle size was determined based on the particle size distribution by volume determined in dry measurement using a laser diffraction particle size distribution analyzer (LS13 320) available from Beckman Coulter, Inc. at a vacuum pressure of 20 mH₂O. The average secondary particle size was defined as equivalent to the particle size corresponding to 50% of the cumulative volume in the particle size distribution. The particle size corresponding to 10% was defined as D10 and the particle size corresponding to 90% was defined as D90.

### (Apparent density)

The apparent density was determined in conformity with JIS K 6891.

### (Standard specific gravity (SSG))

The SSG was determined by the immersion method in conformity with ASTM D792 using a sample molded in conformity with ASTM D4895-89.

### (Angle of repose)

A funnel having a total height of 115 mm, a stem diameter of ϕ26 mm, a stem length of 35 mm, and an angle of mouth of 60° was placed such that the height of the bottom of the funnel was 100 mm from the surface where the sample was to be dropped. Then, 40 g of the sample was dropped through the funnel to form a cone of the sample dropped. The angle of the lower half of the cone was measured using a goniometer, which was defined as the angle of repose.

### (Composition of monomers in fluororesin composition)

The composition was determined by calculation based on the composition of materials.

### (Tensile test)

The tensile test was performed as follows. Specifically, 35 g of powder was put into a ϕ100 mm mold and compression-molded at a pressure of 30 MPa for one minute. The temperature was increased from room temperature to 300°C over three hours, then increased from 300°C to 370°C over four hours, then maintained at 370°C for 12 hours, then decreased to 300°C over five hours, and then decreased to room temperature over one hour, whereby the compression-molded article was fired into a molded article. The molded article was then cut into a dumbbell, which was subjected to the tensile test in conformity with ASTM D1708. Thereby, the tensile strength at break and the tensile strain at break were measured.

### (Amount of low molecular weight fluorine-containing compound)

First, 1 g of a fluororesin composition (powder) was weighed and combined with 10 mL of a 0.3% solution (A) of ammonium hydroxide in methanol, which was prepared from ammonia water and methanol. A sample bottle was placed in an ultrasonic cleaner controlled to a temperature of 60°C and sonicated for two hours, whereby an extract was obtained. The fluorine-containing compound in the extract was analyzed using a liquid chromatograph-mass spectrometer (1290 Infinity II LC system and 6530 time-of-flight mass spectrometer available from Agilent). The specifications of the measurement devices and the measurement conditions are shown in Table 1. Based on the exact masses, the peaks of compounds identified as fluorine compounds having a molecular weight of 800 or lower were extracted, so that an extracted chromatogram was obtained. Four levels of aqueous solutions were prepared using a perfluorooctanoic acid-containing aqueous solution having a known concentration. The aqueous solutions of the respective levels were analyzed and the relationship of the levels and the areas corresponding to the levels were plotted, drawing a calibration curve. Using the extracted chromatogram and the calibration curve, the amount, as an equivalent to perfluorooctanoic acid, of the fluorine-containing compound having a molecular weight of 800 or lower in the extract was calculated.

**[Table 1]**

| LC section | | | | |
|---|---|---|---|---|
| | Device | 1290 Infinity II, Agilent | | |
| | Column | EclipsePulsC18 RRHD 1.8 µm 2.1 × 50 mm, Agilent | | |
| | Mobile phase | A 20 mM CH₃COONH₄/H₂O | | |
| | | B CH₃CN | | |
| | | | 0 to 1 min | A:B = 90:10 |
| | | | 1 to 6 min | A:B = 90:10 to 5:95 Linear gradient |
| | | | 6 to 12 min | A:B = 5:95 |
| | Flow rate | 0.3 ml | | |
| | Column temp. | 40°C | | |
| | Amount of sample | 5 µL | | |

| MS section | | | | |
|---|---|---|---|---|
| | Device | 6530 LC/Q-TOF, Agilent | | |
| | Measurement mode | Electrospray ionization | | |
| | Ionization mode | Negative | | |

### Synthesis Example 1 (synthesis of perfluoroether carboxylic acid ammonium salt A)

A 1-L autoclave was purged with nitrogen and charged with 16.5 g of dehydrated tetramethylurea and 220 g of diethylene glycol dimethyl ether, followed by cooling. Next, 38.5 g of carbonyl fluoride and then 100 g of hexafluoropropylene oxide were fed thereto, followed by stirring. Then, 38.5 g of carbonyl fluoride and 100 g of hexafluoropropylene oxide were again added thereto. The same amounts of carbonyl fluoride and hexafluoropropylene oxide were fed thereto. After the reaction was completed, a reaction liquid mixture was collected. The mixture was separated and the lower layer reaction product was obtained.

A 6-L autoclave was charged with 1000 mL of tetraglyme and CsF (75 g) and purged with nitrogen. The autoclave was cooled and charged with 2100 g of the reaction product obtained above. Hexafluoropropylene oxide was then introduced into the autoclave, so that the reaction was initiated. Finally, 1510 g of hexafluoropropylene oxide was fed thereto. The contents were collected and separated using a separating funnel into an upper layer and a lower layer. The upper layer weighed 1320 g and the lower layer weighed 3290 g. The lower layer was rectified for isolation.

Next, 1000 g of the isolated target was combined with 1000 g of pure water and hydrolyzed. The product was then separated using a separating funnel and the organic layer (lower layer) was collected. The collected solution was washed with sulfuric acid water. The resulting solution was further simply distilled for purification. The resulting purified compound was mixed with 76 g of a 28% by mass ammonia aqueous solution and 600 g of pure water to prepare an aqueous solution. To this aqueous solution was added dropwise 500 g of the product obtained by the above simple distillation. The dropwise addition was followed by addition of a 28% by mass ammonia aqueous solution, so that the pH was adjusted to 7. The product was freeze-dried, whereby a perfluoroether carboxylic acid ammonium salt A was obtained.

### Production Example 1 (production of fluororesin powder A-1)

A coarse powder of homo-PTFE obtained by suspension polymerization of a TFE monomer alone was pulverized using a pulverizer to provide a PTFE molding powder (standard specific gravity (SSG): 2.159, melting point: 345.0°C). Then, 35 g of this molding powder was compression-molded in a ϕ100-mm mold at 30 MPa for one minute and fired at 370°C for three hours. Thereby, a molded article was obtained. The resulting molded article was cut and pulverized using a pulverizer, whereby a fluororesin powder A-1 was obtained. The fluororesin powder A-1 had a melting point of 328°C, an average secondary particle size of 23 um, a D10 of 8 um, a D90 of 48 µm, and an apparent density of 0.64 g/ml.

### Production Example 2 (production of fluororesin powder A-2)

A molded article obtained as in Production Example 1 was cut and pulverized using a pulverizer, whereby a fluororesin powder A-2 was obtained. The fluororesin powder A-2 had a melting point of 328°C, an average secondary particle size of 37 um, a D10 of 7 um, a D90 of 87 µm, and an apparent density of 0.53 g/ml.

### Production Example 3 (production of fluororesin powder B-1)

In a 6-L capacity stainless steel autoclave equipped with a stirring blade, the perfluoroether carboxylic acid ammonium salt A was used to perform a known emulsion polymerization technique, whereby an aqueous dispersion of a homo-PTFE consisting only of a TFE unit was obtained. This was then subjected to coagulation and drying by known techniques, whereby a fluororesin powder B-1 was obtained.

The resulting fluororesin powder B-1 had an apparent density of 0.45 g/ml, an average secondary particle size of 540 µm, a standard specific gravity (SSG) of 2.172, and melting points of 338.6°C and 343.5°C.

### Production Example 4 (production of fluororesin powder B-2)

In a 6-L capacity stainless steel autoclave equipped with a stirring blade, the perfluoroether carboxylic acid ammonium salt A was used to perform a known emulsion polymerization technique, whereby an aqueous dispersion of a modified PTFE containing a TFE unit and a perfluoro(propyl vinyl ether) (PPVE) unit was obtained. This was then subjected to coagulation and drying by known techniques, whereby a fluororesin powder B-2 was obtained.

The resulting fluororesin powder B-2 had an apparent density of 0.46 g/ml, an average secondary particle size of 460 µm, a standard specific gravity (SSG) of 2.169, a melting point of 334.6°C, and a PPVE unit content of 0.14% by mass.

### Example 1

Using Wonder Crusher WC-3, 50 g of the fluororesin powder A-1 and 50 g of the fluororesin powder B-1 were mixed at a rotational frequency of 1900 rpm for 60 seconds, whereby a PTFE powder (fluororesin composition) was obtained. The resulting PTFE powder had an average secondary particle size of 422 um, a D10 of 27 um, a D90 of 787 µm, an apparent density of 0.48 g/ml, and an angle of repose of 37°, and thus had excellent handleability. The PTFE powder contained the TFE unit in an amount of 100% by mass of all polymerized units. The PTFE powder had melting points of 329°C, 339°C, and 344°C, a tensile strength at break of 13 MPa, and a tensile strain at break of 199%.

### Example 2

A PTFE powder was obtained as in Example 1 except that the fluororesin powder B-1 was changed to the fluororesin powder B-2 and the rotational frequency was changed to 2900 rpm. The resulting PTFE powder had an average secondary particle size of 177 um, a D10 of 22 um, a D90 of 421 µm, an apparent density of 0.46 g/ml, and an angle of repose of 36°, and thus had excellent handleability. The PTFE powder contained the TFE unit and the PPVE unit in amounts of respectively 99.93% by mass and 0.07% by mass of all polymerized units. The PTFE powder had melting points of 329°C and 336°C, a tensile strength at break of 24 MPa, and a tensile strain at break of 439%, and contained 1 ppm by mass or less of a low molecular weight fluorine-containing compound (fluorine-containing surfactant containing an anionic portion having a molecular weight of 800 or lower).

### Comparative Example 1

A PTFE powder was obtained as in Example 1 except that the rotational frequency was changed to 2900 rpm. The resulting PTFE powder had an average secondary particle size of 341 um, a D10 of 31 um, a D90 of 717 µm, an apparent density of 0.39 g/ml, and an angle of repose of 41°, and thus had poor handleability. The PTFE powder had melting points of 329°C and 339°C, a tensile strength at break of 19 MPa, and a tensile strain at break of 321%.

### Comparative Example 2

With 35 g of the fluororesin powder A-1 (angle of repose = 21°, melting point 328°C) alone, a tensile test was performed as in Example 1. The tensile strength at break was 9 MPa and the tensile strain at break was 145%.

### Example 3

A PTFE powder was obtained as in Example 2 except that the amount of the fluororesin powder A-1 was changed to 70 g, the amount of the fluororesin powder B-2 was changed to 30 g, and the rotational frequency was changed to 6900 rpm. The resulting PTFE powder had an average secondary particle size of 44 um, a D10 of 12 um, a D90 of 158 µm, an apparent density of 0.44 g/ml, and an angle of repose of 39°, and thus had excellent handleability. The PTFE powder contained the TFE unit and the PPVE unit in amounts of respectively 99.958% by mass and 0.042% by mass of all polymerized units. The PTFE powder had melting points of 329°C and 336°C, a tensile strength at break of 21 MPa, and a tensile strain at break of 454%.

### Example 4

A PTFE powder was obtained as in Example 2 except that 40 g of the fluororesin powder A-1, 45 g of the fluororesin powder B-2, and 15 g of glass fiber (PF E-001 available from Nitto Boseki Co., Ltd.) were used. The resulting PTFE powder had an apparent density of 0.43 g/ml and an angle of repose of 35°, and thus had excellent handleability. The PTFE powder contained the TFE unit and the PPVE unit in amounts of respectively 99.937% by mass and 0.063% by mass of all polymerized units. The PTFE powder had melting points of 329°C and 336°C, a tensile strength at break of 15 MPa, and a tensile strain at break of 386%.

### Example 5

A PTFE powder was obtained as in Example 3 except that 40 g of the fluororesin powder A-1, 45 g of the fluororesin powder B-2, and 15 g of bronze powder (Bro-AT-200 available from Fukuda Metal Foil & Powder Co. Ltd.) were used. The resulting PTFE powder had an apparent density of 0.46 g/ml and an angle of repose of 33°, and thus had excellent handleability. The PTFE powder contained the TFE unit and the PPVE unit in amounts of respectively 99.937% by mass and 0.063% by mass of all polymerized units. The PTFE powder had melting points of 329°C and 336°C, a tensile strength at break of 15 MPa, and a tensile strain at break of 400%.

### Example 6

A PTFE powder was obtained as in Example 3 except that the fluororesin powder A-1 was changed to the fluororesin powder A-2. The resulting PTFE powder had an apparent density of 0.43 g/ml and an angle of repose of 38°, and thus had excellent handleability. The PTFE powder contained the TFE unit and the PPVE unit in amounts of respectively 99.93% by mass and 0.07% by mass of all polymerized units. The PTFE powder had melting points of 329°C and 336°C, a tensile strength at break of 26 MPa, and a tensile strain at break of 393%.

### Example 7

Using a pan pelletizer PZ-02R available from As One Corp., 100 g of the PTFE powder obtained in Comparative Example 1 was combined with 10 g of methanol and granulated by rotation at a rotating frequency of 24 for 20 minutes, whereby a PTFE powder was obtained. The resulting PTFE powder had an apparent density of 0.60 g/ml and an angle of repose of 10°, and thus had excellent handleability. The PTFE powder had melting points of 329°C and 339°C, a tensile strength at break of 15 MPa, and a tensile strain at break of 306%.

## Claims

1. A fluororesin composition comprising:
a non-melt-flowable fluororesin A having a history of being heated to a melting point thereof or higher; and
a non-melt-flowable fluororesin B having no history of being heated to a melting point thereof or higher and being prepared by emulsion polymerization,
the fluororesin composition having an apparent density of 0.42 g/ml or higher.

2. The fluororesin composition according to claim 1,
wherein the fluororesin A is polytetrafluoroethylene.

3. The fluororesin composition according to claim 1 or 2,
wherein the fluororesin composition has at least one melting point within a temperature range lower than 333°C and at least one melting point within a temperature range from 333°C to 360°C.

4. The fluororesin composition according to any one of claims 1 to 3,
wherein the fluororesin composition has an angle of repose of smaller than 40°.

5. The fluororesin composition according to any one of claims 1 to 4,
wherein the fluororesin composition has an average secondary particle size of 50 to 500 um.

6. The fluororesin composition according to any one of claims 1 to 5,
wherein a low molecular weight fluorine-containing compound is contained in an amount of 1 ppm by mass or less of the fluororesin composition.

7. The fluororesin composition according to any one of claims 1 to 6,
wherein the fluororesin composition contains a tetrafluoroethylene unit and a modifying monomer unit based on a modifying monomer copolymerizable with tetrafluoroethylene,
the modifying monomer unit is present in an amount of 1.0% by mass or less of all polymerized units.

8. The fluororesin composition according to any one of claims 1 to 7, which is in the form of powder.

9. The fluororesin composition according to any one of claims 1 to 8,
wherein the fluororesin composition has a tensile strength at break of 10 MPa or higher.

10. The fluororesin composition according to any one of claim 1 to 9,
wherein the fluororesin composition has a tensile strain at break of 150% or higher.

11. The fluororesin composition according to any one of claim 1 to 10,
wherein the fluororesin composition is a granulated product.

12. The fluororesin composition according to any one of claim 1 to 11, further comprising a filler.

13. A molded article obtainable by compression molding and firing the fluororesin composition according to any one of claims 1 to 12.

14. A fluororesin composition comprising:
a non-melt-flowable fluororesin A having a history of being heated to a melting point thereof or higher; and
a non-melt-flowable fluororesin B having no history of being heated to a melting point thereof or higher and being prepared by emulsion polymerization,
the fluororesin composition containing a tetrafluoroethylene unit and a modifying monomer unit based on a modifying monomer copolymerizable with tetrafluoroethylene.

15. The fluororesin composition according to claim 14,
wherein the fluororesin composition has an apparent density of 0.42 g/ml or higher.
